(19) Europäisches Patentamt
European Patent Office
Office européen des brevets

(11) **EP 2 214 339 A1**

(12) **EUROPEAN PATENT APPLICATION**
published in accordance with Art. 153(4) EPC

(43) Date of publication:
**04.08.2010 Bulletin 2010/31**

(51) Int Cl.:
***H04L 1/08*** (2006.01)

(21) Application number: **08863088.4**

(22) Date of filing: **11.12.2008**

(86) International application number:
**PCT/CN2008/073467**

(87) International publication number:
**WO 2009/076903 (25.06.2009 Gazette 2009/26)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.12.2007 CN 200710198759**

(71) Applicant: **Huawei Technologies Co., Ltd.**
**Longgang District, Shenzhen**
**Guangdong 518129 (CN)**

(72) Inventors:
• **DAI, Dingzhang**
**Shenzhen**
**Guangdong 518129 (CN)**

• **WANG, Chengyi**
**Shenzhen**
**Guangdong 518129 (CN)**
• **CAI, Hua**
**Shenzhen**
**Guangdong 518129 (CN)**

(74) Representative: **Körber, Martin Hans et al**
**Mitscherlich & Partner**
**Patent- und Rechtsanwälte**
**Sonnenstraße 33**
**80331 München (DE)**

(54) **A METHOD, SYSTEM AND APPARATUS FOR ADJUSTING THE NHR REFERENCE VALUE**

(57) A method for adjusting an NHR reference value is provided, which is used to determine an average number of HARQ retransmission (NHR) reference value in Quality of Service control. The method includes: comparing an average load of a cell with a preset load threshold; and adjusting a current NHR reference value according to a comparison result. A system for adjusting an NHR reference value is also provided, which includes a base station (BS) and an adjusting entity. A device for adjusting an NHR reference value is also provided. Thus, the NHR reference value can be adjusted dynamically.

FIG. 2

**Description**

The application claims the benefit of priority to China Patent Application No. 200710198759.5, entitled "METHOD, SYSTEM, AND DEVICE FOR ADJUSTING NHR REFERRENCE VALUE" , filed on December 12, 2007, which is incorporated herein by reference in its entirety.

**FIELD OF THE TECHNOLOGY**

The present invention relates to the communications field, and more particularly to a method, system, and device for adjusting a Number of Hybrid Automatic Repeat Request (HARQ) Retransmission (NHR) reference value.

**BACKGROUND OF THE INVENTION**

High Speed Uplink Packet Access (HSUPA) technology is a solution to uplink high speed data transmission in the Wideband Code Division Multiple Access (WCDMA) system, in which a series of key technologies, such as short frames of 10 ms/2 ms, adopting the HARQ protocol on the physical layer, and implementing rapid schedule of user equipment (UE) at a base station (NodeB), are applied to implement high speed uplink data transmission in the WCDMA system.

The HARQ protocol is an improvement to the ARQ protocol, and can help to add redundant information of packets in an ARQ system of a transmission mechanism that requires retransmission when one data transmission fails. The HARQ mechanism has many forms, for example, the mechanism the same as that of the ARQ, that is, in the case that a packet cannot be decoded correctly when the packet is received, the packet is directly discarded, and a packet retransmission request is returned in an uplink channel to request retransmission of the original data. Alternatively, a packet that contains errors when being received is not discarded, and retransmission of a packet that carries redundant information is requested. In this way, the packet that carries redundant information can be combined with a previous packet and decoded to obtain the correct packet. Therefore, in the HARQ protocol, before a correct packet is received, a packet may need to be transmitted for several times. The NHR of a packet HARQ can reflect the quality of service (QoS) of the system. Generally, the smaller the number of retransmission is, the higher the transmission efficiency is, and the better the QoS is.

For the QoS control of the HSUPA service, a method of outer loop power control (OLPC) is generally adopted. The OLPC refers to the following: A serving radio network controller (SRNC) dynamically adjusts a signal-interference ratio (SIR) target value of inner loop power control, so that a user equipment (UE) can keep a certain average NHR, that is, the number of packet retransmission is made to meet the QoS requirements.

In the implementation of the present invention, the inventor finds that the prior art at least has the following problems. Currently, in the QoS control process of the HSUPA service, because the NHR reference value for the QoS control is a fixed value set for meeting the QoS requirements of users, the current QoS control cannot take the load of the system into consideration comprehensively. For example, when the load is light, if the NHR reference value is set to be great, the service cannot reach a limit rate; when the load is heavy, if the NHR reference value is set to be small, the capacity of the cell is wasted.

**SUMMARY OF THE INVENTION**

Accordingly, the present invention is directed to a method, system, and device for adjusting an NHR reference value.

According to one aspect of the present invention, the present invention provides a method for adjusting an NHR reference value, which is adapted to determine an average number of retransmission, that is, the NHR reference value, in QoS control. The method includes the following steps.

An average load of each cell in an active set is compared with a preset load threshold.

A current NHR reference value is adjusted according to a comparison result.

According to another aspect of the present invention, the present invention further provides a device for adjusting an NHR reference value, which includes a comparing module and an adjusting module.

The comparing module is adapted to compare an average load of each cell with a preset load threshold.

The adjusting module is adapted to adjust a current NHR reference value according to a comparison result obtained by the comparing module.

According to another aspect of the present invention, the present invention further provides a system for adjusting an NHR reference value, which includes at least one base station (BS) and an adjusting device.

The at least one BS is adapted to report an average load of a cell.

The adjusting device is adapted to compare the average load of the cell with a preset load threshold, and adjust a current NHR reference value according to a comparison result.

According to the method, device, and system for adjusting an NHR reference value of the present invention, the NHR reference value is adjusted according to the average load of the cell, so that the NHR reference value can be dynamically adjusted. Thus, when the load of the cell is light, the NHR reference value for the QoS control is adjusted downwards; when the load is heavy, the NHR reference value is increased properly.

## BRIEF DESCRIPTION OF THE DRAWINGS

FIG. 1 is a schematic structural view of the HSUPA protocol according to an embodiment of the present invention;

FIG. 2 is a flow chart of a method for adjusting an NHR reference value according to an embodiment of the present invention;

FIG. 3 is a flow chart of a method for adjusting an NHR reference value according to another embodiment of the present invention;

FIG. 4 is a flow chart of a method for adjusting an NHR reference value according to still another embodiment of the present invention; and

FIG. 5 is a schematic structural view of a system for adjusting an NHR reference value according to an embodiment of the present invention.

## DETAILED DESCRIPTION OF THE EMBODIMENTS

In order to make the technical solutions and advantages of the present invention clearer, the present invention is described in further detail below with reference to the accompanying drawings.

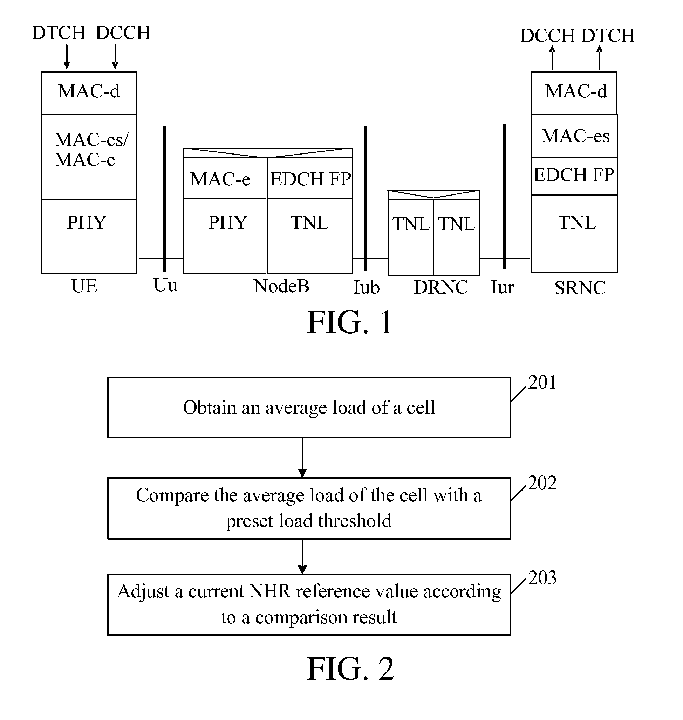

In the structure of the HSUPA protocol, the QoS control is implemented by a serving radio network controller (SRNC). FIG. 1 is a schematic structural view of the HSUPA protocol according to an embodiment of the present invention. As shown in FIG. 1, the structure of the HSUPA protocol mainly includes a UE, a NodeB, a drift radio network controller (DRNC), and an SRNC. The UE and the NodeB are connected through a Uu interface, the DRNC and the NodeB are connected through an Iub interface, and the SRNC and the DRNC can exchange information through an Iur interface. The Iur interface may be implemented through direct physical connection between radio network controllers (RNCs), or be implemented through a proper transmission network. The SRNC is in charge of the following: transferring data between a core network and a user and transferring and receiving Iu interface signaling, performing radio resource control including the QoS control, and performing L2 layer processing on data of an air interface. The performing of L2 layer processing on data of an air interface refers to processing on a Medium Access Control (MAC) and Radio Link Control (RLC) layer. The SRNC also executes basic radio resource management operations, for example, converting parameters of handover decision, OLPC and Radio Access Bearer (RAB) into air interface transmission channel parameters.

As shown in FIG. 1, MAC-d represents a MAC entity for processing a dedicated logic channel and dedicated transmission channel allocated to a UE, and each UE has one MAC-d. For the MAC-d of each UE, the UTRAN has a corresponding MAC-d. MAC-es and MAC-e entities are MAC layer entities after the HSUPA is introduced into a WCDMA system. In order to support rapid schedule of data by the NodeB, the MAC-e entity at the UTRAN side is moved downwards to the NodeB. In order to support macro diversity of the HSUPA, the MAC-es is located at the SRNC.

In an embodiment, the present invention provides a method for adjusting an NHR reference value. The method for adjusting an NHR reference value according to the embodiment of the present invention includes: comparing an average load of a cell in an active set with a preset load threshold; and adjusting a current NHR reference value according to a comparison result.

FIG. 2 is a flow chart of a method for adjusting an NHR reference value according to an embodiment of the present invention. As shown in FIG. 2, the method includes the following steps.

In step 201, obtain an average load of a cell.

The average load of the cell in the active set can be obtained from a measurement report reported by a BS of the cell, or can be extracted from a database of a radio controller. The BS of the cell measures the actual loads of the cell periodically or non-periodically, and averages the actual loads to obtain the average load of the cell. There may be one or more cells in the active set.

In step 202, compare the average load of the cell with a preset load threshold.

There may be one or two preset load thresholds. When there are two load thresholds, the thresholds are expressed as a first load threshold and a second load threshold. The first load threshold corresponds to the situation that the load is heavy. For example, the average load of the cell is up to 80%, that is, many terminals access the cell, and the actually used capacity is 80% of the total capacity. The second load threshold corresponds to the situation that the load is light, for example, the average load of the cell is 20%.

If only the first load threshold is preset, and the first load threshold corresponds to the situation that the load is heavy, when the average load of at least one cell in the active set exceeds the first load threshold, a comparison result that cell average load exceeds the first load threshold is obtained. In this case, the NHR reference value can be adjusted upwards; when the average load of each cell in the active set is less than or equal to the first load threshold, the NHR reference value is not adjusted.

If only the second load threshold is preset, and the second load threshold corresponds to the situation that the load is light, when average load of all the cells or cells of a preset proportion in the active set are lower than the second load threshold, a comparison result that cell average load is lower than the second load threshold is obtained. In this case, the NHR reference value can be adjusted downwards; when the average load of one or more cells in the active set are not lower than the second load threshold, or cells whose average load is lower than the second load threshold in the active set takes up a proportion lower than the preset proportion, the NHR reference value is not adjusted. The active set refers to a set of all radio links that establish a communication service with the UE. For the UE, a radio link corresponds to a specific cell.

If a first load threshold and a second load threshold are both set, the following comparison is required: Comparing whether the average load of all the cells or cells of a preset proportion in the active set is lower than the second load threshold, and comparing whether at least one cell in the active set exceeds the first load threshold.

In step 203, adjust the NHR reference value according to the comparison result.

When the comparison result is that cell average load exceeds the first load threshold, the current NHR reference value is adjusted upwards, for example, the current NHR reference value can be adjusted to a preset upper limit of the NHR reference value, or the current NHR reference value is adjusted upwards according to a preset step.

When the comparison result is that cell average load is lower than the second load threshold, the current NHR reference value is adjusted downwards, for example, the current NHR reference value can be adjusted to be a preset lower limit of the NHR reference value, or the current NHR reference value is adjusted downwards according to a preset step.

In this embodiment, the situation of heavy load is distinguished according to the first load threshold. When the load is heavy, the NHR reference value is adjusted upwards to increase the actual number of times a packet is retransmitted, so as to improve the retransmission combination gain of the HARQ, thereby improving the transmission efficiency and transmission reliability. Moreover, the situation of light load is distinguished according to the second load threshold. When the load is light, the NHR reference value is adjusted downwards to decrease the actual number of times a packet is retransmitted, so as to decrease the transmission delay, thereby improving the transmission efficiency.

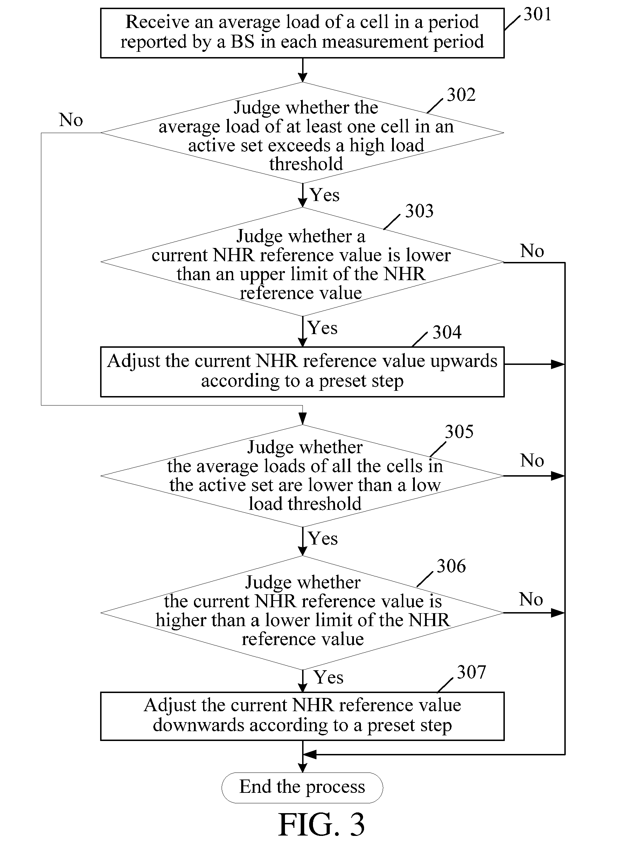

FIG. 3 is a flow chart of a method for adjusting an NHR reference value according to another embodiment of the present invention. In this embodiment, a method for adjusting the current NHR reference value according to a step is provided, in which two load thresholds are set, including a high load threshold and a low load threshold. The high load threshold corresponds to a first load threshold, and the low load threshold corresponds to a second load threshold. As shown in FIG. 3, the method includes the following steps.

In step 301, in each measurement period, receive an average load of a cell in the period reported by a BS.

In this embodiment, the measurement period of the average load of the cell is preset, and in each measurement period, the average load of the cell in the period reported by the BS is received.

In step 302, judge whether the average load of at least one cell in an active set exceeds the high load threshold. If the average load of at least one cell exceeds the high load threshold, step 303 is performed; if the average load of each cell in the active set is less than or equal to the high load threshold, step 305 is performed.

In step 303, whether a current NHR reference value is lower than an upper limit of the NHR reference value is judged. If the current NHR reference value is lower than the upper limit of the NHR reference value, step 304 is performed; if the current NHR reference value is not lower than the upper limit of the NHR reference value, step 305 is performed.

In this embodiment, the upper limit of the NHR reference value is a preset maximum number of retransmission.

In step 304, adjust the current NHR reference value upwards according to a preset step.

In this embodiment, the method for upward adjustment includes: selecting the smaller value from the following two values as the adjusted NHR reference value: the upper limit of the NHR reference value, and a sum of the current NHR reference value and the preset adjustment step, which is expressed by the following formula:

$$\text{Adjusted NHR reference value} = \min(\text{NHR reference value} + \text{preset adjustment step},$$

$$\text{upper limit of NHR reference value})$$

In step 305, judge whether the average loads of all the cells in the active set are lower than the low load threshold. If the average loads of all the cells in the active set are lower than the low load threshold, step 306 is performed; if the average loads of one or more cells in the active set are not lower than the low load threshold, the process ends.

In step 306, whether the current NHR reference value is higher than a lower limit of the NHR reference value is judged. If the current NHR reference value is higher than the lower limit of the NHR reference value, step 307 is performed; if the current NHR reference value is not higher than the lower limit of the NHR reference value, the process ends.

In this embodiment, the lower limit of the NHR reference value is a preset minimum number of retransmission.

In step 307, adjust the current NHR reference value downwards according to a preset step.

In this embodiment, the method for downward adjustment includes: selecting the greater value from the following two values as the adjusted NHR reference value: the lower limit of the NHR reference value, and the value obtained by subtracting the preset adjustment step from the current NHR reference value, which is expressed by the following formula:

$$\text{Adjusted NHR reference value} = \max(\text{NHR reference value} - \text{preset adjustment step},$$

$$\text{lower limit of NHR reference value})$$

In this embodiment, the upper limit of upward adjustment, that is, the upper limit of the NHR reference value, and the lower limit of downward adjustment, that is, the lower limit of the NHR reference value, are provided. Definitely, the sum of the current NHR reference value plus the preset adjustment step or the value obtained by subtracting the preset adjustment step from the current NHR reference value can also be used as the adjusted NHR reference value. In this embodiment, the sequence of comparing the average load of an cell in the active set with the high load and low load can be exchanged, that is, whether the average load of all the cells in the active set is lower than the low load threshold is judged, and the operations described in step 306 and step 307 are performed according to the judgment result, and then whether the average load of at least one cell in the active set is higher than the high load threshold is judged, and the operations described in step 303 and step 304 are performed according to the judgment result.

In this embodiment, the situations of heavy load and light load are distinguished according to the average load of an cell in the active set, the first load threshold, and the second load threshold. Then, according to the preset step, the current NHR reference value is adjusted, so that when the average load of the cell is too low, the transmission delay can be decreased by gradually reducing the actual number of times a packet is retransmitted, so as to improve the transmission efficiency. When the average load of the cell is too high, the transmission reliability can be improved by gradually increasing the actual number of times a packet is retransmitted, so as to improve the system capacity.

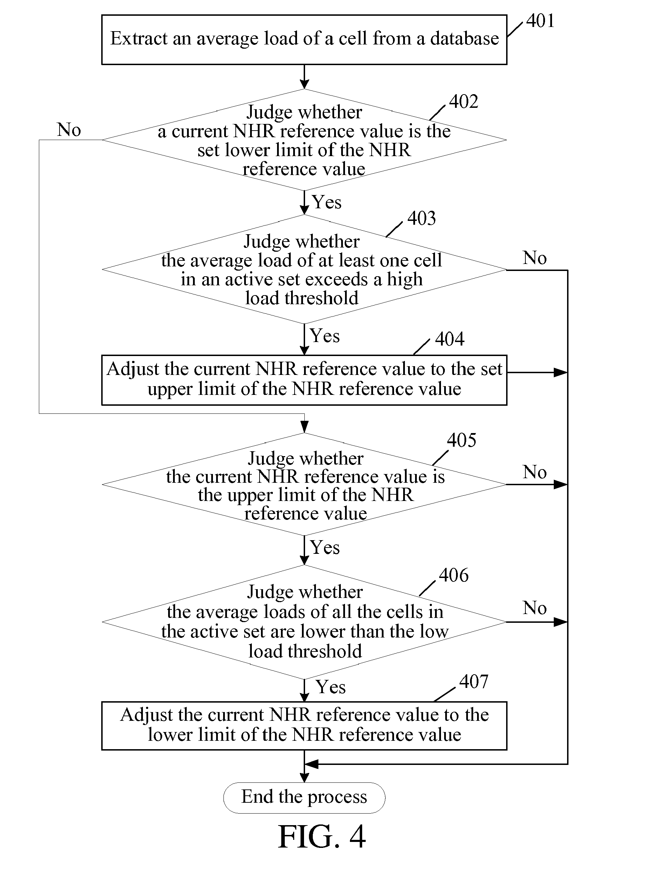

FIG. 4 is a flow chart of a method for adjusting an NHR reference value according to still another embodiment of the present invention. In this embodiment, the method for adjusting the current NHR reference value according to a preset upper limit of the NHR reference value and a preset lower limit of the NHR reference value is adopted, and two load thresholds are set, including a high load threshold and a low load threshold. The high load threshold corresponds to a first load threshold, and the low load threshold corresponds to a second load threshold. As shown in FIG. 4, the method includes the following steps.

In step 401, extract an average load of a cell from a database.

In step 402, judge whether a current NHR reference value is the set lower limit of the NHR reference value. If the current NHR reference value is the set lower limit of the NHR reference value, step 403 is performed; if the current NHR reference value is not the set lower limit of the NHR reference value, step 405 is performed.

In step 403, judge whether the average load of at least one cell in an active set exceeds the high load threshold. If the average load of at least one cell exceeds the high load threshold, step 404 is performed; if the average load of each cell in the active set does not exceed the high load threshold, the process ends.

In step 404, adjust the current NHR reference value to the set upper limit of the NHR reference value.

In this step, the preset upper limit of the NHR reference value is used as the adjusted NHR reference value, and the process ends.

In step 405, judge whether the current NHR reference value is the upper limit of the NHR reference value. If the current NHR reference value is the upper limit of the NHR reference value, step 406 is performed; if the current NHR reference value is not the upper limit of the NHR reference value, the process ends.

In step 406, judge whether the average loads of all the cells in the active set are lower than the low load threshold. If the average loads of all the cells in the active set are lower than the low load threshold, step 407 is performed; if the average loads of one or more cells in the active set are not lower than the low load threshold, the process ends.

In step 407, adjust the current NHR reference value to the lower limit of the NHR reference value.

In this step, the lower limit of the NHR reference value is used as the adjusted NHR reference value.

In this embodiment, the situations of heavy load and light load are distinguished according to the average high and low load thresholds of the cell, and the current NHR reference value is adjusted according to the preset upper and lower limits of the NHR reference value, so that when the average load of the cell is too low, the transmission delay can be decreased by reducing the actual number of times a packet is retransmitted, while when the average load of the cell is too high, the transmission reliability can be improved by increasing the actual number of times a packet is retransmitted.

In this embodiment, the following is taken as example in the description: the average load of a cell in the active set is earlier compared with the high load threshold. As an optional solution, the average load of the cell may also be earlier compared with the low load threshold, and then compared with the high load threshold. That is, the sequence of performing the two processes of comparing the average load of the cell with the high load threshold and comparing the average load of the cell with the low load threshold may be exchanged, which is not limited in the embodiment of the present invention.

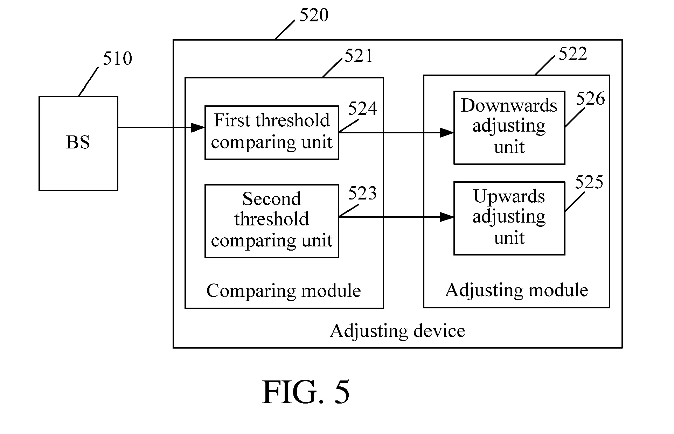

FIG. 5 is a schematic structural view of a system for adjusting an NHR reference value according to an embodiment of the present invention. As shown in FIG. 5, the system includes an adjusting device 520 and at least one BS 510.

Specifically, the BS 510 is adapted to report an average load of a cell.

The adjusting device 520 is adapted to compare the average load of the cell reported by the BS 510 with a preset load threshold, and adjust a current NHR reference value according to a comparison result. The adjusting device may be an SRNC. Alternatively, the adjusting device can be integrated in another physical entity at a network side.

The adjusting device 520 includes a comparing module 521 and an adjusting module 522.

The comparing module 521 is adapted to compare the average load of the cell with a preset low load threshold.

The adjusting module 522 is adapted to adjust the current NHR reference value according to the comparison result obtained by the comparing module 521.

Furthermore, the comparing module 521 includes a first threshold comparing unit 524 and/or a second threshold comparing unit 523.

The first threshold comparing unit 524 is adapted to compare the average load of each cell in the active set with a preset first load threshold, and obtain a comparison result that cell average load exceeds the first load threshold when the average load of at least one cell in the active set is higher than the first load threshold, for example, the high load threshold.

The second threshold comparing unit 523 is adapted to compare the average load of each cell with a preset second load threshold, and obtain a comparison result that cell average load is lower than the second load threshold when the average load of all the cells or the cells of a preset proportion in the active set is lower than the second load threshold.

Furthermore, the adjusting module 522 includes an upwards adjusting unit 526 and a downwards adjusting unit 525.

The upwards adjusting unit 526 is adapted to adjust the current NHR reference value upwards when the comparison result obtained by the comparing module 521 is that the average load exceeds the high load threshold.

Specifically, the upwards adjusting unit 526 is adapted to adjust the current NHR reference value to a preset upper limit of the NHR reference value when the comparison result obtained by the comparing module 521 is that cell average load exceeds the high load threshold, or adjust the current NHR reference value upwards according to a preset adjustment step, or adjust the NHR reference value to the preset upper limit of the NHR reference value when the NHR reference value is a preset lower limit of the NHR reference value, or adjust the current NHR reference value upwards according to the preset adjustment step when the NHR reference value is lower than the preset upper limit of the NHR reference value.

The downwards adjusting unit 525 is adapted to adjust the NHR reference value downwards when the comparison result obtained by the comparing module 521 is that cell average load is lower than the low load threshold.

Specifically, the downwards adjusting unit 525 is adapted to adjust the current NHR reference value to the preset lower limit of the NHR reference value when the comparison result obtained by the comparing module 521 is that cell average load is lower than the low load threshold, or adjust the current NHR reference value downwards according to the preset adjustment step, or adjust the NHR reference value to the preset lower limit of the NHR reference value when the NHR reference value is the preset upper limit of the NHR reference value, or adjust the current NHR reference value downwards according to the preset adjustment step when the NHR reference value is higher than the preset lower limit of the NHR reference value.

It should be understood that, when the comparing module 521 includes the first threshold comparing unit 524, but does not include the second threshold comparing unit 523, the adjusting module 522 may include the upwards adjusting unit 526, but not include the downwards adjusting unit 525. When the comparing module 521 includes the second threshold comparing unit 524, but does not include the first threshold comparing unit 523, the adjusting module 522 may include the downwards adjusting unit 525, but not include the upwards adjusting unit 526.

In an embodiment, the present invention further provides an adjusting device, which is adapted to compare an average load of a cell in an active set with a preset load threshold, and adjust a current NHR reference value according to a comparison result. For example, the adjusting device receives the average load of the cell reported by a BS, compares the average load with a preset load threshold, and adjusts the current NHR reference value according to the comparison result. In specific implementation, the adjusting device may be an SRNC, or be integrated in another physical entity at a network side. The specific structure of the adjusting device in this embodiment may be the same as that described in the above embodiments, and thus is not described again here.

Person having ordinary skill in the art may understand that all or part of the steps of the method according to the embodiments of the present invention may be implemented by a program instructing relevant hardware. The program may be stored in a computer readable storage medium. The storage medium may be a magnetic disk, a Compact Disk Read-Only Memory (CD-ROM), a Read-Only Memory (ROM) or a Random Access Memory (RAM).

The above descriptions are merely preferred embodiments of the present invention, but not intended to limit the scope of the present invention. Any modification, equivalent replacement, or improvement made without departing from the present invention should fall within the scope of the present invention.

**Claims**

1. A method for adjusting a Number of Hybrid Automatic Repeat Request, HARQ, Retransmission, NHR, reference value, **characterized by** comprising:

    comparing (202) an average load of each cell in an active set with a preset load threshold; and
    adjusting (203) a current NHR reference value according to a comparison result.

2. The method according to claim 1, further comprising: obtaining (201) the average load of each cell,
    wherein the obtaining the average load of each cell comprises: receiving the average load of each cell reported by a base station, BS, periodically or extracting the average load of the cell from a database.

3. The method according to claim 1, wherein the comparing the average load of each cell in the active set with the present load threshold comprises:

    comparing the average load of each cell in the active set with a first load threshold, and if the average load of at least one cell in the active set is higher than the first load threshold, the comparison result being that cell average load exceeds the first load threshold;
    the adjusting the current NHR reference value according to the comparison result comprises:

       adjusting the NHR reference value upwards when the comparison result is that cell average load exceeds the first threshold.

4. The method according to claim 3, wherein the adjusting the NHR reference value upwards comprises:

    adjusting the NHR reference value to a preset upper limit of the NHR reference value; or
    adjusting the current NHR reference value upwards according to a preset adjustment step.

5. The method according to claim 1 or 3, wherein the comparing the average load of each cell in the active set with the preset load threshold comprises:

    comparing the average load of each cell in the active set with a second load threshold, and if the average loads of all the cells or the cells of a preset proportion in the active set are lower than the second load threshold, the comparison result being that cell average load is lower than the second load threshold;
    the adjusting the current NHR reference value according to the comparison result comprises:

       adjusting the NHR reference value downwards when the comparison result is that cell average load is lower than the second load threshold.

**6.** The method according to claim 5, wherein the adjusting the NHR reference value downwards comprises:

adjusting the NHR reference value to a preset lower limit of the NHR reference value; or
adjusting the current NHR reference value downwards according to a preset adjustment step.

**7.** A device for adjusting a Number of Hybrid Automatic Repeat Request, HARQ, Retransmission, NHR, reference value, **characterized by** comprising:

a comparing module (521), adapted to compare an average load of each cell in an active set with a preset load threshold; and
an adjusting module (522), adapted to adjust a current NHR reference value according to a comparison result obtained by the comparing module.

**8.** The device according to claim 7, wherein the comparing module comprises:

a first threshold comparing unit (524), adapted to compare the average load of each cell in the active set with a preset first load threshold, and obtain the comparison result that cell average load exceeds the first load threshold when the average load of at least one cell in the active set is higher than the first load threshold; and/or
a second threshold comparing unit (523), adapted to compare the average load of each cell with a preset second load threshold, and obtain the comparison result that cell average load is lower than the second load threshold when the average loads of all the cells or the cells of a preset proportion in the active set are lower than the second load threshold.

**9.** The device according to claim 7, wherein the adjusting module comprises:

an upwards adjusting unit (526), adapted to adjust the current NHR reference value upwards when the comparison result obtained by the comparing module is that cell average load exceeds the first load threshold; and/or
a downwards adjusting unit (525), adapted to adjust the current NHR reference value downwards when the comparison result obtained by the comparing module is that cell average load is lower than the second load threshold.

**10.** The device according to claim 7, wherein the device is a serving radio network controller, SRNC.

**11.** A system for adjusting a Number of Hybrid Automatic Repeat Request, HARQ, Retransmission, NHR, reference value, **characterized by** comprising:

at least one base station, BS, adapted to report an average load of a cell; and
an adjusting device, adapted to compare the average load of the cell with a preset load threshold, and adjust a current NHR reference value according to a comparison result.

**12.** The system according to claim 11, wherein the device comprises:

a comparing module, adapted to compare the average load of the cell with the preset load threshold; and
an adjusting module, adapted to adjust the current NHR reference value according to the comparison result obtained by the comparing module.

**13.** The system according to claim 12, wherein the comparing module comprises:

a first threshold comparing unit, adapted to compare the average load of the cell in an active set with a preset first load threshold, and obtain the comparison result that cell average load exceeds the first load threshold when the average load of at least one cell in the active set is higher than the first load threshold; and/or
a second threshold comparing unit, adapted to compare the average load of the cell with a preset second load threshold, and obtain the comparison result that cell average load is lower than the second load threshold when the average loads of all the cells or the cells of a preset proportion in the active set are lower than the second load threshold.

**14.** The system according to claim 12, wherein the adjusting module comprises:

an upwards adjusting unit, adapted to adjust the current NHR reference value upwards when the comparison result obtained by the comparing module is that cell average load exceeds a high load threshold; and

a downwards adjusting unit, adapted to adjust downwards the current NHR reference value when the comparison result obtained by the comparing module is that cell average load is lower than a low load threshold.

DTCH DCCH

| MAC-d |
| MAC-es/ MAC-e |
| PHY |

| MAC-e | EDCH FP |
| PHY | TNL |

| TNL | TNL |

DCCH DTCH

| MAC-d |
| MAC-es |
| EDCH FP |
| TNL |

UE     Uu     NodeB     Iub     DRNC     Iur     SRNC

## FIG. 1

Obtain an average load of a cell — 201

Compare the average load of the cell with a preset load threshold — 202

Adjust a current NHR reference value according to a comparison result — 203

## FIG. 2

Receive an average load of a cell in a period
reported by a BS in each measurement period — 301

↓

Judge whether the — 302
average load of at least one cell in an
active set exceeds a high load
threshold

No ←

↓ Yes

Judge whether a — 303
current NHR reference value is lower
than an upper limit of the NHR
reference value

No →

↓ Yes

Adjust the current NHR reference value upwards
according to a preset step — 304

↓

Judge whether — 305
the average loads of all the cells in
the active set are lower than a low
load threshold

No →

↓ Yes

Judge whether — 306
the current NHR reference value is
higher than a lower limit of the NHR
reference value

No →

↓ Yes

Adjust the current NHR reference value — 307
downwards according to a preset step

↓

End the process

FIG. 3

Extract an average load of a cell from a database — 401

Judge whether
a current NHR reference value is the
set lower limit of the NHR
reference value — 402

No

Yes

Judge whether
the average load of at least one cell
in an active set exceeds a high
load threshold — 403

No

Yes

Adjust the current NHR reference value to the set
upper limit of the NHR reference value — 404

Judge whether
the current NHR reference value is
the upper limit of the NHR
reference value — 405

No

Yes

Judge whether
the average loads of all the cells in
the active set are lower than the low
load threshold — 406

No

Yes

Adjust the current NHR reference value to the
lower limit of the NHR reference value — 407

End the process

FIG. 4

FIG. 5

# INTERNATIONAL SEARCH REPORT

International application No.

PCT/CN2008/073467

**A. CLASSIFICATION OF SUBJECT MATTER**

H04L 1/08 (2006.01) i

According to International Patent Classification (IPC) or to both national classification and IPC

**B. FIELDS SEARCHED**

Minimum documentation searched (classification system followed by classification symbols)

IPC:H04L, G06F，H04J，H04Q

Documentation searched other than minimum documentation to the extent that such documents are included in the fields searched

Electronic data base consulted during the international search (name of data base and, where practicable, search terms used)

WPI, EPODOC, PAJ, CNPAT, CNKI: HARQ number time? service retransmit+ average load adjust threshold

**C. DOCUMENTS CONSIDERED TO BE RELEVANT**

| Category* | Citation of document, with indication, where appropriate, of the relevant passages | Relevant to claim No. |
|---|---|---|
| X | CN101044773A (IPWIRELESS INC ) 26 Sep. 2007 (26.09.2007) see the description pages 25-26, 28 | 1-2, 7,10-12 |
| A | See whole document. | 3-6, 8-9, 13-14 |
| PX | CN101197645A (HUAWEI TECHNOLOGY CO LTD) 11 Jun. 2008 (11.06.2008) see claims 1-13, the description page 2 | 1-14 |
| A | US2002172192A1 (DENSO CORP) 21 Nov. 2002 (21.11.2002) see whole document. | 1-14 |
| A | EP1557967A1 (MATSUSHITA ELECTRIC IND CO LTD) 27 Jul. 2005 (27.07.2005) see whole document. | 1-14 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 10 Mar. 2009 (10.03.2009) | **19 Mar. 2009 (19.03.2009)** |

| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>ZHANG Xin<br><br>Telephone No. (86-10)62411280 |
|---|---|

Form PCT/ISA/210 (second sheet) (April 2007)

## INTERNATIONAL SEARCH REPORT
Information on patent family members

| International application No. |
|---|
| PCT/CN2008/073467 |

| Patent Documents referred in the Report | Publication Date | Patent Family | Publication Date |
|---|---|---|---|
| CN101044773A | 26.09.2007 | US2006084389A1 | 20.04.2006 |
| | | WO2006042784A1 | 27.04.2006 |
| | | EP1817924A1 | 15.08.2007 |
| | | US7292825B2 | 06.11.2007 |
| | | KR20070068465A | 29.06.2007 |
| | | JP2008517504T | 22.05.2008 |
| CN101197645A | 11.06.2008 | NONE | |
| US2002172192A1 | 21.11.2002 | US7164654B2 | 16.01.2007 |
| EP1557967A1 | 27.07.2005 | WO2005071875A1 | 04.08.2005 |
| | | JP2007166642A | 28.06.2007 |
| | | INKOLNP200601851E | 11.05.2007 |
| | | CN1926795A | 07.03.2007 |
| | | US2007183451A1 | 09.08.2007 |
| | | JP2007523529T | 16.08.2007 |
| | | KR20070006748A | 11.01.2007 |
| | | EP1557967B1 | 26.03.2008 |
| | | DE602004012702E | 08.05.2008 |

Form PCT/ISA/210 (patent family annex) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200710198759